# EUROPEAN PATENT APPLICATION

(11) **EP 1 362 792 A2**
(43) Date of publication of application: **19.11.2003**
(21) Application number: 03252981.0
(22) Date of filing: 14.05.2003
(51) Int. Cl.: B65D 1/34, B65D 85/72

(54) **Plastic food container**

(30) Priority: 17.05.2002 US 151637
(71) Applicant: Kraft Foods Holdings, Inc., Northfield, Illinois 60093 (US)
(72) Inventor: Leigner, Frank Paul, Northbrook, Illinois 60062 (US); VanLoocke, Cory Klaiber, Pleasanton, California 94588 (US)
(74) Representative: W.P. THOMPSON & CO.

(57) **Abstract**

The present invention provides food containers (50) with increased release characteristics. More specifically, plastic food containers containing glycerol monostearate at a level of greater than about 4000 ppm, and preferably at levels of about 6000 to about 8000 ppm are provided. The glycerol monostearate apparently acts as a release agent to allow food products to be dispensed more easily. For example, cream cheese provided in the food containers of this invention can be dispensed in a single block which would be especially useful for recipe use.

## Description

### Field of the Invention

The present invention generally relates to food containers with improved release characteristics. More specifically, this invention relates to plastic food containers containing glycerol monostearate at a level of greater than about 4000 ppm, and preferably at levels of about 6000 to about 8000 ppm. The glycerol monostearate apparently acts as a release agent to allow food products to be dispensed more easily. For example, cream cheese provided in the food containers of this invention can be can be dispensed in a single block which would be especially useful for recipe use.

### Background of the Invention

Many food products are conveniently packaged in plastic tubs or containers. Some of these products, such as, for example, cream cheese, cannot be removed cleanly from a plastic tub or container as they tend to "stick" to the plastic surfaces. It would be desirable, therefore, to provide improved plastic tubs or containers from which such "sticky" products can be removed easily and, if desired, in a single integral block (e.g., a single block of cream cheese consisting essentially of the entire contents of the container). It has now been found that such a plastic tub can be prepared by providing a relatively high level (i.e., greater than about 4000 ppm) of glycerol monostearate in at least the interior surface layers of the tub which contact the food product.

Glycerol monostearate has been used as an additive in packaging materials, including food packaging materials. For example, U.S. Patents 5,919,547 (July 6, 1999) and 6,033,758 (March 7, 2000) report that glycerol monostearate can be used as an anti-fog additive in a food packaging film (especially for packaging red meat). U.S. Patent 5,843,581 (December 1, 1998) provides a barrier layer for packaging food such as cheese which contains a plasticizer and/or stabilizer at levels up to about 5 percent. One such plasticizer and/or stabilizer is glycerol monostearate; the barrier layer is, however, spaced between two other films and would not, therefore, contact the food product.

U.S. Patent 6,022,612 (February 8, 2000) provides a polypropylene-thermoplastic rubber blend packaging film, including multilayer packaging films having a skin layer and a core layer. The skin layer can contain from 0 to about 10,000 ppm of a slip agent; one such slip agent is glycerol monostearate. The core or inner layer may also contain additives, such as glycerol monostearate, at 0 to 5000 ppm.

### Summary of the Invention

The present invention generally relates to food containers with improved release characteristics. More specifically, this invention relates to plastic (e.g., polypropylene, polyethylene, and the like) food containers containing glycerol monostearate at a level of greater than about 4000 ppm, and preferably at levels of about 6000 to about 8000 ppm. The plastic food containers of the present invention are especially adapted for cream cheese containers. Cream cheese provided in the food containers of this invention can be can be dispensed in a single block which would be especially useful for recipe use.

The food containers or tubs of this invention can be prepared having the glycerol monostearate distributed essentially throughout the container material or concentrated mainly in a thin surface layer of the container which will contact the food product. The glycerol monostearate appears to act as a release agent to allow food products to be dispensed more easily. Indeed, cream cheese can be dispensed in a single block form simply by flexing the plastic container by hand and/or light thumb pressure on the bottom of the plastic container.

More specifically, the present invention provides a plastic container for containing a food product, said container comprising integral sidewalls and a bottom portion defining a compartment to contain the food product and having interior surfaces which contact the food product, wherein at least the interior surfaces comprise a plastic composition containing at least 4000 ppm glycerol monostearate, whereby the food product can easily be released and removed from the compartment as an integral unit.

### Brief Description of the Drawings

Figure 1 illustrates a food container of the present invention. Panel A: perspective view; panel B: top view; panel C: cross-sectional side view; and panel D: cross-sectional detail illustrating interior surface layer containing glycerol monostearate release agent.
Figure 2 provides a process flow schematic diagram illustrating the production of the food containers of this invention wherein the glycerol monostearate is concentrated in a thin surface layer of the container.

### Detailed Description of the Invention

This invention provides a plastic container for containing a food product, said container comprising integral sidewalls and a bottom portion defining a compartment to contain the food product and having interior surfaces which contact the food product, wherein at least the interior surfaces comprise a plastic composition containing at least 4000 ppm glycerol monostearate, whereby the food product can easily be released and removed from the compartment as an integral unit.

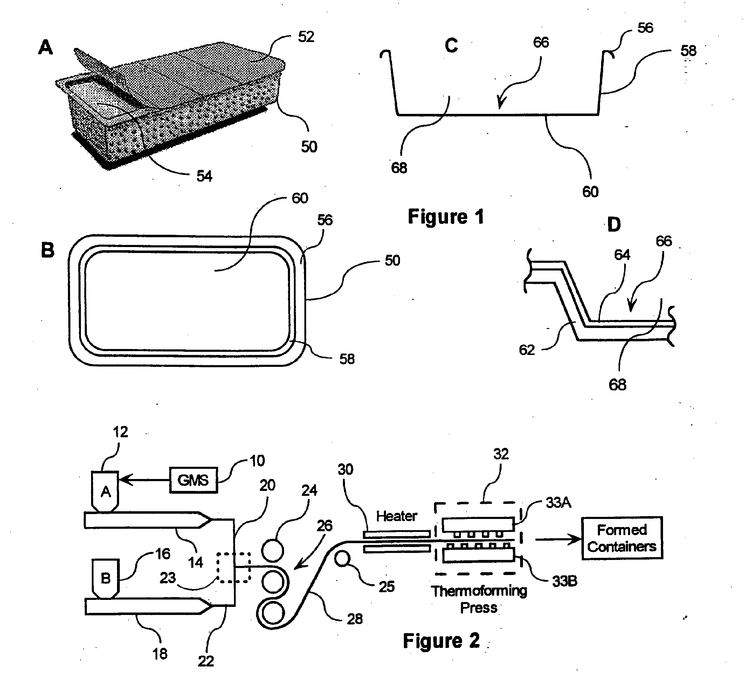

Figure 1 generally illustrates a rectangular plastic container 50 of the present invention containing a food product 54 (e.g., hot-packed cream cheese) and a pealable foil seal 52. Of course, other shaped containers (e.g., square, round, oval, and the like) can be prepared if desired. Preferably, the plastic container 50 is formed from polypropylene, polyethylene, polyester, polystyrene, or mixtures thereof. More preferably, the plastic container 50 is polypropylene. Although not shown in Figure 1, the plastic container 50 also comprises a plastic cover such that the pealable foil seal 52 is only exposed once the plastic cover is removed. The plastic container 50 generally has a rim 56, sidewalls 58, and bottom 60. The sidewalls 58 and bottom 60 generally define a food compartment 68. Preferably the sidewalls 58 are slanted outward (generally about 2 to about 20 degrees) as illustrated in Figure 1 to facilitate the removal of the food product. At least the interior surfaces 66 of the sidewalls 58 and bottom 60 are formed from a plastic composition having at least about 4000 ppm glycerol monostearate such that the food product 54 is in contact with the glycerol monostearate-containing plastic material.

The glycerol monostearate may be distributed throughout the thickness of the sidewalls 58 and bottom 60 so long as the internal surfaces contain sufficient glycerol monostearate to provide the required release characteristics. Alternatively, as shown in Figure 1D, the glycerol monostearate may be contained only in a thin layer 64 forming the interior surfaces 66 and be essentially absence in the exterior, and generally thicker, plastic layer 62. Although only two layer of plastic are shown in Figure 1 D, more than two plastic layers can be used if desired so long as at least the interior layer 64 contains sufficient glycerol monostearate to provide the required release characteristics. Although not shown in Figure 1, the bottom 60 preferably has a slight indentation or recess whereby pressure can be applied more easily to the bottom to help assist removal or "ejection" of the food product by hand.

Generally, the overall thickness of the sidewalls 58 and bottom 60 are about 0.1 to about 2 microns. If only the interior layer 64 contains glycerol monostearate (see Figure 1D), it generally is about 0.01 to about 1 microns thick. Of course, other thicknesses can be used is desired.

The plastic containers of the present invention can be prepared using conventional plastic forming techniques, including, for example, injection molding, thermoforming, and the like. Figure 2 illustrates the preparation of plastic containers having multiple plastic layers wherein only the interior surfaces of the final product contain glycerol monostearate. Plastic resin 12 (resin A), mixed with the appropriate amount of glycerol monostearate (GMS) 10, is fed into extruder 14 for forming layer 20. Similarly plastic resin 16 (resin B which may be the same as or different from resin C) is fed into extruder 18 for forming layer 22. The layers 20 and 22 are formed into film 28 having surface 26 containing glycerol monostearate in a heated coextrusion block 23, pass through rollers 24, and over roller 25 before entering into heater 30. The layers 20 and 22 may also be formed into film 28 using, for example, a laminator, adhesive, or other conventional techniques known in the art (not shown). In heater 30, the film is heated sufficiently to allow forming into the desired shapes in thermoforming press 32 having upper and lower plates 33A and 33B. After being removed from the thermoforming press 32, and trimmed as appropriate, the final formed containers having interior surfaces containing glycerol monostearate are obtained.

Although Figure 2 illustrates an essentially continuous process, the process could be carried out in stages. For example, the film 28 could be collected and stored until it was desired to produce the final containers. The stored film could then be thermoformed as in Figure 2 so long as care is taken to insure that the film is feed such that the interior surfaces contain the desired glycerol monostearate film layer. Additionally, although Figure 2 illustrates the preparation of food containers from a co-extruded two-layer film, additional co-extruded layers can be incorporated into the film and food container as desired.

The containers of the present invention can be used for a wide variety of food products. Such food products include, for example, cheese, peanut butter, cheese spread, shortening, jam, jelly, gelatin-type dessert, pudding, ice cream, or ice milk. The containers of the present invention are especially adapted for cheeses, and more particularly, cream cheeses. The contents of the containers (e.g., cream cheese, including hot-packed cream cheese) as prepared by the present invention can easily be removed in an integral block by using simple and relatively light hand pressure on the outside surfaces of the containers. The light hand pressure may include, for example, simply flexing the container or applying light pressure on the bottom of an overturned container, or combinations thereof. Since the food product is removed as an integral unit, there is essentially no waste nor need to attempt to "scrape" the remaining food product off the interior surfaces. Moreover, the use of the food product in recipes is facilitated since the integral block is the net weight or amount on the label. If desired, lines or cutting guides can be formed in the bottom of the container (such that indentations are formed in the bottom of the integral food block) to further facilitate cutting the integral block into known sizes for recipe usage.

As those skilled in the art will realize, modifications can be made in the fabrication, dimensions, shapes, and the like of the containers of this invention as desired. Such changes are intended to fall within the appended claims.

## Claims

1. A plastic container (50) for containing a food product (54), said container (50) comprising integral sidewalls (58) and a bottom portion (60) defining a compartment (68) to contain the food product (54) and having interior surfaces (66) which contact the food product (54), wherein at least the interior surfaces (66) comprise a plastic composition containing at least 4000 ppm glycerol monostearate, whereby the food product (54) can easily be released and removed from the compartment (68) as an integral unit.

2. A plastic container (50) according to claim 1, wherein the plastic composition forming at least the interior surfaces (66) contains about 6000 to about 8000 ppm glycerol monostearate.

3. A plastic container (50) according to claim 1, wherein the food product (54) is cheese, peanut butter, cheese spread, shortening, jam, jelly, gelatin-type dessert, pudding, ice cream, or ice milk.

4. A plastic container (50) according to any one of claims 1 to 3, wherein the food product (54) is cheese.

5. A plastic container (50) according to claim 4, wherein the cheese is cream cheese.

6. A plastic container (50) according to any one of claims 1 to 5, wherein the plastic composition comprises polypropylene, polyethylene, polyester, polystyrene, or a mixture thereof.

7. A plastic container (50) according to claim 6, wherein the plastic composition comprises polypropylene.

8. A plastic container (50) according to any one of claims 1 to 7, wherein only the interior surfaces (66) contain glycerol monostearate and wherein the interior surfaces (66) are about 0.01 to about 1 microns thick.
